# EUROPÄISCHE PATENTSCHRIFT

(11) **EP 1 372 111 B1**
(45) Veröffentlichungstag und Bekanntmachung des Hinweises auf die Patenterteilung: **27.09.2006**
(21) Anmeldenummer: 03000309.9
(22) Anmeldetag: 09.01.2003
(51) Int. Cl.: G06T 5/40

(54) **Automobiles Infrarot-Nachtsichtgerät und automobiles Display**
Infrared night vision device and display for automobile
Appareil de vision nocturne par infrarouges pour automobile et son dispositif de visualisation

(30) Priorität: 28.01.2002 DE 10203421
(43) Veröffentlichungstag der Anmeldung: 17.12.2003
(73) Patentinhaber: DaimlerChrysler AG, 70567 Stuttgart (DE)
(72) Erfinder: Eggers, Helmut, 89077 Ulm (DE); Kurz, Gerhard, 73240 Wendlingen (DE); Seekircher, Jürgen, 73760 Ostfildern (DE); Wohlgemuth, Thomas, 72631 Aichtal (DE)

(56) Entgegenhaltungen:
- DE-A- 10 017 185
- FR-A- 2 726 144
- US-A- 5 555 324

## Beschreibung

Die Erfindung betrifft ein automobiles Display, ein automobiles Infrarot-Nachtsichtgerät und ein Fahrzeug mit einem solchen.

Automobile Nachtsichtgeräte sind aus der DE 39 32 216 C2 und aus der DE 40 07 646 A1 bekannt.

Diese zeigen eine Kamera, welche eine Empfindlichkeit im nicht sichtbaren Frequenzbereich des Lichts beispielsweise mit einer Wellenlänge zwischen 800 nm und 2000 nm hat. Darüber hinaus zeigen diese Lichtquellen, die polarisiertes bzw. nicht polarisiertes Infrarotlicht aussenden, zur Beleuchtung der Umgebung. Das von der Umgebung reflektierte infrarote Licht wird durch die Infrarotkamera aufgenommen und auf einem im Sichtbereich des Fahrzeuglenkers angeordneten Anzeigegerät, das beispielsweise als Head-up-Display ausgebildet ist, abgebildet. Dabei werden die durch die Kamera aufgenommenen Bilddaten dem Anzeigegerät/Display wiedergegeben.

Nachtsichtsysteme dieser Art für automobile Anwendungen sind in verschiedener Form bereits vorgestellt worden. Aufgrund von negativen Effekten in der Kamera ("Blooming", "Nachziehen") oder von Streulichteffekten können so genannte "Spitzlichter" entstehen. Diese Spitzlichter können in ihrer geometrischen Gestalt erheblich gößer als das eigentliche Bild der Leuchtquelle ausfallen.

Auf Grund der hohen maximalen Leuchtdichten für automobile Anzeigeeinheiten kann von den Spitzlichtern selbst bei reduzierter Gesamthelligkeit der Anzeige im Automobil eine nicht unerhebliche Blendwirkung auf den Betrachter ausgehen.

Aus der DE 10017185 A1 sind eine Vorrichtung und ein Verfahren zur Aufnahme und Anzeige von Bildern bekannt, die ein mobiles Beobachtungssystem für Szenen mit einer extremen Helligkeitsdynamik schaffen, ohne dass eine Blendung des Beobachters stattfindet. Hierbei wird ein Verfahren zur Bildverarbeitung genutzt, um aufgenommene Bilder in zusammenhängende Bereiche aufzuteilen und innerhalb der einzelnen Bereiche den jeweiligen Helligkeitskontrast individuell an die Helligkeitsdynamik des Anzeigemittels anzupassen. Die Aufteilung des Bildes in Bereiche mit unterschiedlicher Lichtstärke erfolgt bevorzugt mit Hilfe von Verfahren und Algorithmen zur Bildverarbeitung, wie der Anwendung von Schwellwerten und bereichsorientierten Segmentierungsverfahren. Insbesondere bei Auftreten extremer Helligkeiten findet eine Abblendung des Sichtbereichs statt. Die Offenlegungsschrift DE 19950681 A 1 beschreibt ein Bilderfassungssystem, insbesondere für Kraftfahrzeuge, das es erlaubt einzelne Bildteile von am Bildschirm darzustellenden Bildern, die eine zu große Helligkeit aufweisen, vollständig oder teilweise abzudunkeln. Diese Bildbereiche können entweder unter Verlust sämtlicher dort vorhandener Bildinformation komplett ausgeblendet werden oder alternativ auch mit verringerter Intensität angezeigt werden.

Der Erfindung liegt die Aufgabe zugrunde, ein automobiles Display bzw. Infrarot-Nachtsichtgerät anzugeben, das für einen Fahrer oder Fahrzeuginsassen besser bzw. einfacher ablesbar bzw. dessen Information besser aufnehmbar und damit nützlicher ist bzw. ein Fahrzeug anzugeben, das mit einem solchen automobilen Display bzw. Infrarot-Nachtsichtgerät ausgestattet ist.

Diese Aufgabe wird erfindungsgemäß gelöst durch eine automobile Displayeinheit mit den Merkmalen des Anspruchs 1 bzw. die Verwendung einer automobilen Displayeinheit gemäß den Merkmalen des Anspruchs 7.

Vorteilhafte Weitergestaltungen der Erfindung sind Gegenstand von Unteransprüchen.

Die Erfindung geht davon aus, dass die automobile Displayeinheit, welche z.B. zur Darstellung von Bilddaten eines Nachtsichtgeräts geeignet ist, mit einer Bildverarbeitungseinheit versehen ist, welche Spitzlichter erkennt und ihre Bildpunkte durch Bildpunkte ersetzt, welche zumindest teilweise in ihrer Helligkeit heruntergesetzt sind.

Hierzu werden der Displayeinheit beispielsweise von einer Kamera oder von einem bildgebenden Radarsensor oder einer anderen entsprechenden Bildquelle der Displayeinheit die zu verarbeitenden und wiederzugebenden Bilddaten zugeführt. In einer Bildverarbeitungseinheit werden diese Bilddaten verarbeitet, indem zusammenhängende Bereiche von Bilddaten bestimmt werden, deren Bildpunkte eine größere Helligkeit als ein vorgegebener Helligkeitsgrenzwert zeigen. Die ermittelten Bildpunkte werden dabei einer Zusammenhangsanalyse unterzogen. Es sind eine Vielzahl von bekannten Verfahren zur Zusammenhangsanalyse bekannt. Beispielsweise hat es sich bewährt, ein sogenanntes Zählverfahren zu verwenden, bei dem überprüft wird, ob im Umfeld eines Bildpunktes andere Bildpunkte existieren, die eine entsprechend hohe Helligkeit aufweisen. Ist eine genügende Anzahl qualifizierter Nachbarbildpunkte gefunden, wird dieser Punkt als Teil eines zusammenhängenden Gebietes erkannt und dementsprechend markiert. Daneben sind auch andere ebenso geeignete Zusammenhangsanalyseverfahren bekannt, wie das CCC-Verfahren.

Durch die Zusammenhangsanalyse werden Bereiche in den zugeführten Bilddaten ermittelt, die die Spitzlichter repräsentieren. Die Bilddaten dieser zusammenhängenden Bereiche werden dahingehend angepasst, dass ihnen zumindest teilweise geänderte Helligkeitswerte zugeordnet werden, die eine geringere Helligkeit repräsentieren. Hierdurch werden zielgerichtet diejenigen Bereiche des wiederzugebenden Bildes gezielt abgedunkelt, die zu einer besonderen Beeinträchtigung des Benutzers der automobilen Displayeinheit führen können.

Die Abdunklung des zusammenhängenden Bereiches erfolgt zumindest teilweise. Sie muß nicht vollständig erfolgen, wobei sich eine vollständige Abdunklung sehr bewährt hat.

Bei den Bilddaten kann es sich sowohl um Schwarz-Weiß-Bilddaten als auch um Farbbilddaten oder ähnliche Bilddaten handeln, denen gemein ist, dass sie eine Information zu der wiederzugebenden Helligkeit, beispielsweise einen Grauwert oder einen ähnlichen Wert aufweisen. Jeder Bildpunkt wird durch Bilddaten repräsentiert, die einen Helligkeitswert enthalten und darüber hinaus noch weitere wesentliche Informationen, beispielsweise Farbwerte und entsprechendes (R-G-B-Daten).

Von besonderem Vorteil hat es sich erwiesen, die abzudunkelnden Bildpunkte dahingehend abzudunkeln, dass deren Helligkeitswert um einen konstanten, vorgegebenen Helligkeitswert abgesenkt werden, was zu einer sehr einfachen Handhabung bei sehr geringem Rechneraufwand führt. Darüber hinaus hat es sich bewährt, die Helligkeitswerte der abzudunkelnden Bildpunkte um einen vorgegebenen Faktor abzudunkeln, d.h. den ursprünglichen Helligkeitswert relativ abzusenken, d.h. ihn um einen bestimmten Prozentsatz oder vorgegebenen Faktor abzudunkeln. Eine ebenso einfache und wirkungsvolle Methode zur Abdunklung ist dadurch gegeben, dass der abzudunkelnde Bereich durch Bilddaten ersetzt wird, die einen vorgegebenen Helligkeitswert anstelle einer vorgegebenen konstanten oder vorgegebenen relativen Absenkung der Helligkeit zeigt. Neben diesen besonders bevorzugten Formen der Absenkung sind verschiedene andere Formen der Absenkung der Helligkeit durch Reduktion der Helligkeitswerte möglich und durchaus vorteilhaft.

Es hat sich besonders bewährt, eine Speichertabelle vorzusehen, aus der vorgegebene Helligkeitswerte, auf die die Helligkeitswerte abgesenkt werden sollen oder um die die vorliegenden Helligkeitswerte abzusenken sind oder die vorgegebene Faktoren, um die die ursprünglichen Helligkeitswerte abgesenkt werden sollen, entnehmbar sind. Diese Speichertabelle ermöglicht eine differenzierte Absenkung der Helligkeit beispielsweise von der Größe der Bereiche, die ein Spitzlicht repräsentieren. Die Größe des Bereiches eines Spitzlichtes ergibt sich hierbei aus der Anzahl der Bildpunkte des zusammenhängenden Bereiches. Dabei hat sich besonders bewährt, Bereiche von großer Ausdehnung stärker abzusenken als Bereiche von geringerer Ausdehnung.

Es hat sich besonders bewährt, den zusammenhängenden Bereich durch eine Einheit zur Bestimmung eines Zentral- und eines Randbereichs in einen Zentral- und einen Randbereich aufteilen zu lassen und diese differenziert zu behandeln und dadurch eine angenehme Helligkeitsabsenkung, die die störende Blendwirkung des Benutzers verhindert, zu schaffen. Durch die Differenzierung ist ein sehr angenehmes und einfaches Aufnehmen der Bildinformationen für den Benutzer erreicht. Dabei hat es sich als besonders vorteilhaft erwiesen, den Randbereich des zusammenhängenden Bereichs in seinen Helligkeitswerten unverändert zu lassen und den Zentralbereich nach einer der vorbeschriebenen Weisen deutlich abzusenken. Hierdurch entsteht eine Darstellung des Spitzlichtes in der Art einer Korona-Darstellung, wie sie bei einer Sonnenfinsternis entsteht. Diese Darstellung erweist sich für den Benutzer als sehr angenehm. Darüber hinaus ist es vorteilhaft, sowohl den Zentralbereich als auch den Randbereich in seinen Helligkeitswerten zumindest teilweise zu erniedrigen, wobei der Zentralbereich stärker erniedrigt wird als der Randbereich. Dies ist insbesondere durch eine Erniedrigung um vorgegebene Helligkeitsfaktoren besonders einfach zu erreichen, in dem der Faktor für die relative Absenkung der Helligkeit des Zentralbereiches größer gewählt ist als der des Randbereiches. Eine besonders vorteilhafte Form der Helligkeitsabsenkung wird dadurch erreicht, dass der Randbereich eine graduierte Helligkeitsabsenkung zeigt, der einen gleitenden Übergang vom nichthelligkeitsabgesenkten Bereich außerhalb des zusammenhängenden Bereichs zu dem Zentralbereich zeigt. Hierdurch ergibt sich eine noch angenehmere Darstellung der wiederzugebenden Bilddaten.

Es hat sich als vorteilhaft erwiesen, die Bildverarbeitungseinheit so auszubilden, dass sie geeignet ist, zusammenhängende Gebiete von einer sehr geringen Größe, beispielsweise von unter 20 Pixel, nicht einer Absenkung der Helligkeit zu unterziehen, während größere zusammenhängende Bereiche, die ein Spitzlicht repräsentieren, zielgerichtet einer Helligkeitsabsenkung unterzogen werden.

Vorzugsweise wird der Bildverarbeitungseinheit eine Kompressionsstufe zugeordnet, die zur Reduktion der Helligkeitsdynamik der zugeführten Bilddaten verwendet wird. Hierzu werden die Helligkeitswerte der zugeführten Bilddaten auf ein vorgegebenes Helligkeitsintervall komprimiert, das durch einen maximalen Helligkeitswert und einen minimalen Helligkeitswert bestimmt ist. Durch diese Vorverarbeitung der Bilddaten in Verbindung mit der Anpassung der Helligkeitswerte in zusammenhängenden Bereichen gelingt es eine Darstellung der Bilddaten auf dem Display der Displayeinheit zu ermöglichen, die sich als sehr angenehm und dem Benutzer als besonders einfach aufnehmbar erweist.

Dabei hat es sich besonders bewährt, den oberen Grenzwert des Kompressionsintervalles Hₘₐₓ gleich dem Helligkeitsgrenzwert zu wählen, so dass ein- und derselbe Helligkeitswert für die Kompression wie auch für die Bestimmung der zusammenhängenden Bereiche gewählt ist, was zur einem besonders effizienten Zusammenwirken der Kompressionsstufe und der Bildverarbeitungseinheit mit der Einheit zur Erniedrigung der Helligkeitswerte in zusammenhängenden Bildbereichen führt.

Als besonders vorteilhaft hat es sich herausgestellt, ein automobiles Nachtsichtgerät mit einer automobilen Displayeinheit mit vorgenannter Bildverarbeitungseinheit und insbesondere mit zugeordneter Kompressionsstufe, wie zuvor beschrieben, zu versehen, da gerade diese automobilen Nachtsichtgeräte Bilddaten mit einem sehr großen Helligkeitsdynamikbereich zugeführt bekommen, die gerade durch die Verwendung von Displays mit großer Leuchtkraft und damit mit großen Helligkeits- und Kontrastwerten ohne entsprechende erfindungsgemäße Vorkehrungen eine Blendung des Benutzers zur Folge haben. Aufgrund der erfindungsgemäßen Ausbildung der automobilen Displayeinheit als solche bzw. als Teil des automobilen Nachtsichtgeräts, welches vorzugsweise mit einer IR-Kamera mit logarithmischer Helligkeitskennlinie versehen ist, ist eine unerwünschte Blendung des Benutzers zumindest reduziert oder ggfs. völlig verhindert.

Eine weitere Ausbildung der Erfindung zeigt ein Fahrzeug mit einer automobilen Disyplayeinheit bzw. mit einem automobilen Nachtsichtgerät, wie sie zuvor beschrieben wurden. Ein solches Automobil ermöglicht es dem Benutzer, seine Umgebung sehr einfach und gut aufnehmbar wahrzunehmen bzw. zusätzlich relevante Meßdaten, wie Temperatur, Fahrzeuggeschwindigkeit und ähnliches für seine Fahrentscheidungen zur Verfügung gestellt zu bekommen.

Im folgenden wird die Erfindung am Beispiel eines automobilen Nachtsichtgeräts näher beschrieben.
- Figur 1: zeigt den Aufbau des automobilen Nachsichtgerätes,
- Figur 2: zeigt eine beispielhafte Nachtsichtszene mit Spitzlichtern und
- Figur 3: zeigt in einer schematischen Darstellung die Funktionsweise der Bildverarbeitungseinheit.

Die in den Figuren dargestellte Erfindung bezieht sich auf Nachtsichtgeräte für automobile Anwendungen.

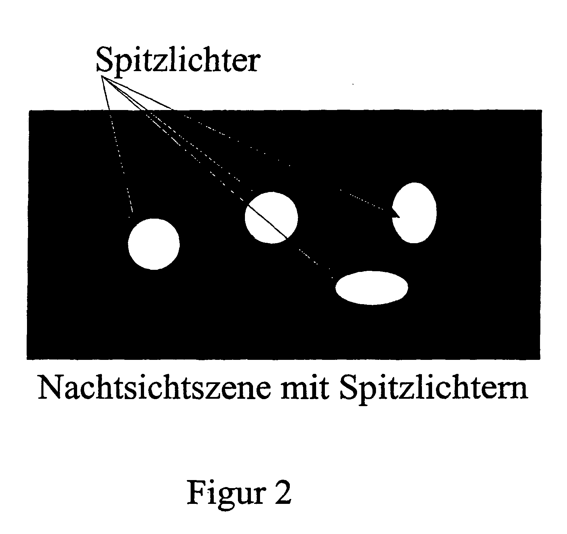

Aufgrund von negativen Effekten in der Kamera ("Blooming", "Nachziehen") oder von Streulichteffekten können die so genannten "Spitzlichter" entstehen, wobei diese in ihrer geometrischen Gestalt noch erheblich gößer als das eigentliche Bild der Leuchtquelle ausfallen können. Eine beispielhafte Darstellung dieser Spitzlichter ist in Figur 2 wiedergegeben.

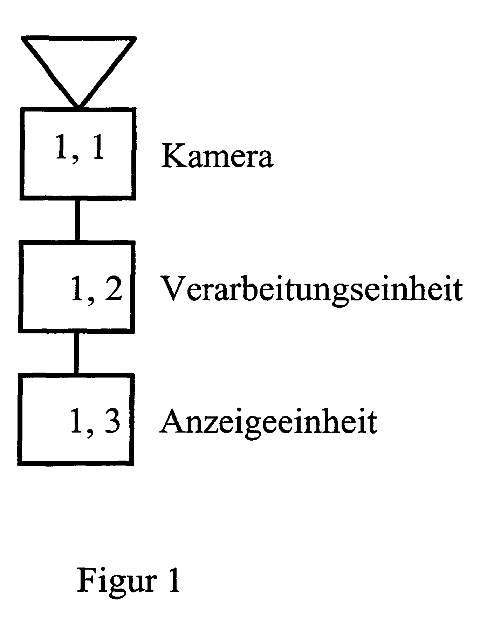

Die Erfindung ermöglicht es, dem Betrachter (Fahrer eines Automobils) ein detailreiches, brilliantes und blendfreies Bild zu präsentieren. Das erfindungsgemäße automobile Nachtsichtgerät ist wie es in Figur 1 dargestellt aufgebaut.

Auf Grund der hohen maximalen Leuchtdichten für automobile Anzeigeeinheiten kann von den Spitzlichtern selbst bei reduzierter Gesamthelligkeit der Anzeige eine nicht unerhebliche Blendwirkung auf den Betrachter ausgehen. Durch die Erfindung wird ein Verfahren und eine Vorrichtung vorgeschlagen, die Spitzlichter erkennen und eine beliebige helligkeitsabsenkende Veränderung ihrer Grauwerte ermöglichen, die jeweils abhängig von der jeweiligen Ausbildung oder Anwendung des Nachtsichtsystems differenziert gestaltet werden kann.

Es nimmt die Umgebung außerhalb des Fahrzeugs mit Hilfe einer hochempfindlichen und hochdynamischen elektronischen Kamera auf (1, 1). Zur Steigerung des Dynamikumfangs können die einzelnen Bildpunkte der Kamera schaltungstechnich als Empfänger mit lichtabhängig veränderlicher Kennlinie ausgeführt sein. Typisch sind hier stückweise lineare oder logarithmische Kennlinien. Die Kamera wandelt das aufgenommene Bild gemäß ihrer Kennlinie in ein Feld von Grauwerten ('digitales Bild') um. Auf Grund der geforderten hohen Dynamik der Kamera werden zur Darstellung des Kontrastumfangs mindestens 8, meist jedoch 10 oder 12 Bit verwendet.

In einer Bildverarbeitungseinheit (1, 2) werden die Bilder so aufbereitet, daß sie zur Darstellung auf dem Display (1, 3) geeignet sind. Diese Aufbereitung kann viele Schritte umfassen, kann jedoch auch nur wie beim Stand der Technik im einfachen "Durchreichen" der Bilder bestehen.

Die Displayeinheit wandelt das verarbeitete Bild in sichtbares Licht um und bringt es dem Betrachter zur Wahrnehmung. Das Display kann z.B. als Röhrenbildschirm, als LCD- oder TFT-Anzeige, als Projektionsmodul (Head-Up-Display) oder in anderer Form ausgeführt sein. Allen Varianten ist typisch gemeinsam, daß sie aus technischen Gründen regelmäßig nur einen Kontrastumfang von 6, maximal 8 Bit darstellen können. Gleichzeitig sind aus Gründen der Erkennungssicherheit für andere Anzeigen erhebliche Leuchtdichten in Bereichen maximaler Helligkeit gefordert.

Speziell in nächtlichen Verkehrsszenen ergibt sich aus der dunklen, unbeleuchteten Umgebung und der Anwesenheit aktiver Leuchtquellen (z.B. Scheinwerfer anderer Fahrzeuge) ein extrem hoher Szenenkontrast, der durchaus 80 dB (1:10000) überschreiten kann. Die Empfindlichkeit der Sensoren wird benötigt, um in nicht von fremden Leuchtquellen beleuchteten Bereichen auch passive (nichtleuchtende) Objekte mit hinreichendem Kontrast darstellen zu können. Der hohe Dynamikbereich ergibt sich aus der wahrscheinlichen Anwesenheit aktiver Leuchtquellen. Zur zusätzlichen Aufhellung passiver Objekte ist es möglich, daß das Fahrzeug des Nachtsichtsystems selbst über einen Beleuchter verfügt.

Aus dem Gesagten ergibt sich, daß die Bildverarbeitungseinheit (1, 2) speziell bei nächtlichen Szenen das von der Kamera gelieferte Bild mit 10...12 Bit auf ein anzeigegerechtes Bild von 6(oder 8) Bit komprimieren muß, wobei wieder unterschiedliche Verfahren (nichtlineare Kennlinien) zur Anwendung kommen können.

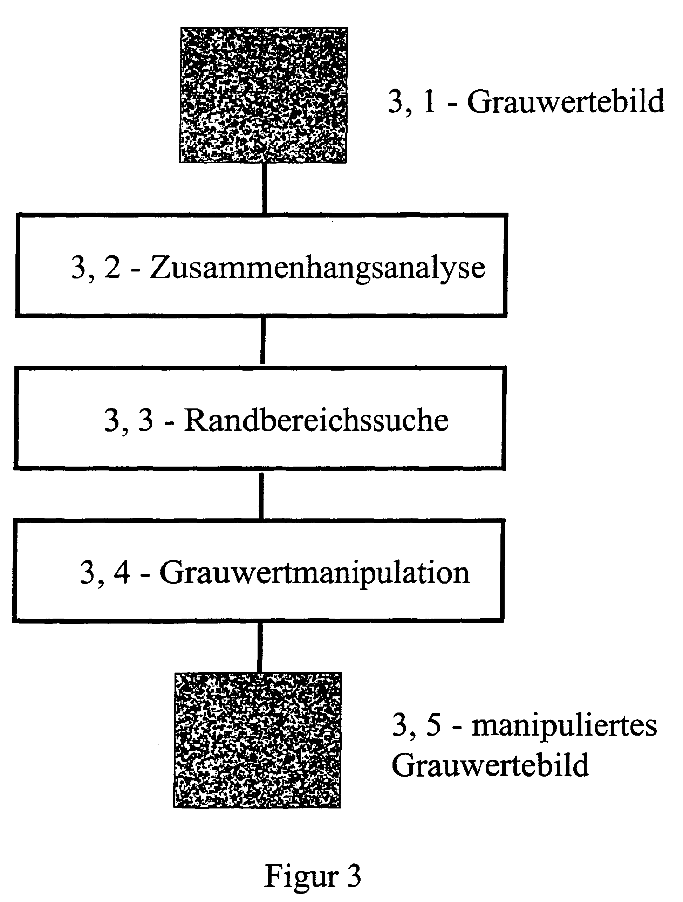

Der Kern des erfindungsgemäßen Verfahrens setzt nach der Kompression der Bilddaten auf den gewünschten Grauwertebereich ein. Es besteht aus den in Figur 3 dargestellten Schritten. Das Grauwertbild (3, 1) wird nach zusammenhängenden Gebieten maximaler Helligkeit durchmustert (Zusammenhangsanalyse; 3, 2), wobei Gebiete unterhalb einer bestimmten Größe ignoriert werden können. Ein Gebiet zusammenhängender Grauwerte besteht aus mindestens zwei Bildpunkten der gleichen Grauwertstufe. In den gefundenen Gebieten wird ein Zentralbereich und ein Randbereich bestimmt (Randbereichssuche; 3, 3). Anschließend werden die Bildpunkte, die im Zentral- oder Randbereich liegen entsprechend den Anforderungen der Anwendung manipuliert (Grauwertmanipulation; 3,4). Die Manipulation der Grauwerte kann im Zentral- und im Randbereich unterschiedlich sein. Das manipulierte Grauwertbild (3, 5) wird dann zur Anzeige weitergegeben.

Die Manipulation kann z.B. so erfolgen, daß im Zentralbereich der Grauwert des Bildpunktes um einen bestimmten, festen Wert vermindert wird, wodurch die Blendwirkung dieser Bereiche vermindert wird. Alternativ kann der Grauwert der betroffenen Bildpunkte auch durch einen festen Wert ersetzt werden, der so gewählt ist, daß keine Blendwirkung auftritt. Die Manipulation kann schlagartig einsetzen, ohne Unterscheidung von Zentralund Randbereich, oder es kann im Randbereich ein gleitender Übergang von den tatsächlichen Grauwerten zu den manipulierten Grauwerten des Zentralbereichs hergestellt werden. Die Wahl eines geeigneten Wertes zur Manipulation des Grauwertes kann selbst wieder durch ein eigenes Verfahren erfolgen, aber auch durch Auslesen des Werte aus einer Tabelle, die mit einem geeigneten Zählwert (Mittelwert, Grauwertesumme, Anzahl der Pixel einer bestimmten Graustufe in einem Zählfenster) indiziert wird.

Automobile Nachtsichtsysteme, wie das dargestellte, werden mit hochempfindlichen und hochdynamischen (evtl. logarithmischen) Bildsensoren/Kameras aufgebaut. Dabei übersteigt in der Regel der vom Sensor verarbeitbare Grauwerte-Bereich die Fähigkeiten des Displays um ein Vielfaches. Es ist deshalb erforderlich einen Teilbereich des Sensor-Grauwertebereichs zur Anzeige auszuwählen, wobei unter- und überschießende Grauwerte auf den Minimal- bzw. Maximalwert gesetzt werden (Kompession). Es entstehen besonders im Bereich der Maximalwerte geschlossene Inseln maximaler Helligkeit, von denen eine Blendwirkung für den Betrachter ausgeht. Der Grauwert in zusammenhängenden Bereichen maximaler Helligkeit muß wieder abgesenkt werden (die Helligkeit ist proportional zum Grauwert). Dazu wird in Abhängigkeit von den Formparametern des Bereiches (z.B. Größe und/oder Umfang) ein neuer Grauwert mit verändertem Helligkeiteindruck bestimmt und der betreffende Bereich ganz oder teilweise mit diesem Grauwert aufgefüllt. Die Bestimmung dieses Grauwertes erfolgt nach den Bedürfnissen der jeweiligen Anwendung. Die Blendwirkung zusammenhängender Bereiche maximaler Helligkeit in der Anzeige wird hierdurch reduziert oder gar vermieden.

## Patentansprüche

1. Automobile Displayeinheit zur Darstellung von Bilddaten eines Nachtsichtgerätes
mit einer Bildverarbeitungseinheit (1,2), welcher Bilddaten (3,1) zugeführt werden, und die geeignet ist, die ihr zugeführten Bilddaten (3,1) dahingehend zu verarbeiten,
dass zusammenhängende Bereiche von Bilddaten bestimmt werden, deren Bildpunkte eine größere Helligkeit als ein vorgegebener Helligkeitsgrenzwert zeigen,
dass die Bilddaten (3,1) der Bildpunkte dieser zusammenhängenden Bereiche durch Bilddaten ersetzt werden, die zumindest teilweise einen niedrigeren Helligkeitswert aufweisen,
mit einem Display (1,3) zur Darstellung der von der Bildverarbeitungseinheit (1,2) zugeführten Bilddaten
und mit einer Steuereinheit zur Steuerung des Displays (1,3),
**dadurch gekennzeichnet,**
**dass** die Bildverarbeitungseinheit (1,2) eine Einheit zur Bestimmung eines Zentral- und eines Randbereiches des jeweiligen zusammenhängenden Bereiches aufweist und geeignet ist, den Bildpunkten des Zentralbereiches Bilddaten mit erniedrigter Helligkeit zuzuordnen, wohingegen den Bildpunkten des Randbereiches Bilddaten mit dazu unterschiedlichen Helligkeitswerten zugeordnet werden.

2. Automobile Displayeinheit nach Anspruch 1, **dadurch gekennzeichnet, dass** die Bildverarbeitungseinheit (1,2) geeignet ist, den Bildpunkten des Zentralbereiches Bilddaten mit erniedrigter Helligkeit zuzuordnen, wohingegen den Bildpunkten des Randbereiches Bilddaten mit unveränderten Helligkeitswerten zugeordnet werden.

3. Automobile Displayeinheit nach Anspruch 1, **dadurch gekennzeichnet, dass** die Bildverarbeitungseinheit geeignet ist, den Bildpunkten des Zentralbereiches Bilddaten mit erniedrigter Helligkeit zuzuordnen, wohingegen den Bildpunkten des Randbereiches Bilddaten mit relativ zum Zentralbereich weniger erniedrigten Helligkeitswerten zugeordnet werden.

4. Automobile Displayeinheit nach Anspruch 3, **dadurch gekennzeichnet, dass** die Bildverarbeitungseinheit (1,2) geeignet ist, den Bildpunkten des Zentralbereiches Bilddaten mit erniedrigter Helligkeit zuzuordnen, wohingegen den Bildpunkten des Randbereiches Bilddaten zugeordnet werden, deren mit zunehmender Nähe zu dem Zentralbereich sich den Helligkeitswerten des Zentralbereiches annähern.

5. Automobile Displayeinheit nach einem der vorstehenden Ansprüche, **dadurch gekennzeichnet, dass** der Bildverarbeitungseinheit (1,2) eine Kompressionsstufe zur Reduktion der Helligkeitsdynamik vorgeschaltet ist, die geeignet ist, die Helligkeitswerte auf ein Helligkeitsintervall zwischen Hmax und Hmin komprimiert werden.

6. Automobile Displayeinheit nach Anspruch 5, **dadurch gekennzeichnet, dass** als vorgebender Helligkeitsgrenzwert zur Bestimmung der zusammenhängenden Bereiche der Wert Hmax gewählt ist.

7. Verwendung einer automobilen Displayeinheit nach einem der vorstehenden Ansprüche mit einem automobilen Nachtsichtgerät mit einer Kamera (1,1), insbesondere einer IR-Kamera, welche eine logarithmische Helligkeitskennlinie zeigt in einem Fahrzeug.

## Claims

1. Automobile display unit for representing image data of a night vision device,
having an image processing unit (1, 2) which is supplied with image data (3, 1) and which is suitable for processing the image data (3, 1) supplied to it so as to determine continuous regions of image data whose image points show a brightness higher than a predetermined brightness limit value,
and the image data (3, 1) of the image points of these continuous regions are replaced by image data which at least partially have a lower brightness value,
having a display (1, 3) for representing the image data supplied by the image processing unit (1, 2),
and having a control unit for controlling the display (1, 3),
**characterized in that**
the image processing unit (1, 2) has a unit for determining a central region and an edge region of the respective continuous region and is suitable for allocating image data with a reduced brightness to the image points of the central region, whereas image data with brightness values different therefrom are allocated to the image points of the edge region.

2. Automobile display unit according to Claim 1, **characterized in that** the image processing unit (1, 2) is suitable for allocating image data with a reduced brightness to the image points of the central region, whereas image data with unmodified brightness values are allocated to the image points of the edge region.

3. Automobile display unit according to Claim 1, **characterized in that** the image processing unit is suitable for allocating image data with a reduced brightness to the image points of the central region, whereas image data with brightness values lowered less relative to the central region are allocated to the image points of the edge region.

4. Automobile display unit according to Claim 3, **characterized in that** the image processing unit (1, 2) is suitable for allocating image data with a reduced brightness to the image points of the central region, whereas image data which approach the brightness values of the central region with increasing proximity to the central region are allocated to the image points of the edge region.

5. Automobile display unit according to one of the preceding claims, **characterized in that** the image processing unit (1, 2) is preceded by a compression stage for reducing the dynamic brightness range, which is suitable for compressing the brightness values to a brightness interval between Hmax and Hmin.

6. Automobile display unit according to Claim 5, **characterized in that** the value Hmax is selected as a predetermined brightness limit value for determining the continuous regions.

7. Use of an automobile display unit according to one of the preceding claims, having an automobile night vision device with a camera (1, 1), in particular an IR camera, which shows a logarithmic characteristic brightness curve in a vehicle.

## Revendications

1. Unité d'affichage pour automobile destinée à représenter les données d'image d'un appareil de vision nocturne comprenant une unité de traitement d'image (1, 2) à laquelle sont acheminées des données d'image (3, 1) et qui est conçue pour traiter les données d'image (3, 1) qui lui sont acheminées de telle manière à déterminer les zones connexes de données d'image dont les pixels présentent une luminosité supérieure à un seuil de luminosité prédéfini, que les données d'image (3, 1) des pixels de ces zones connexes sont remplacées par des données d'image qui présentent au moins partiellement une valeur de luminosité inférieure, comprenant un écran (1, 3) pour représenter les données d'image acheminées par l'unité de traitement d'image (1, 2) et comprenant une unité de commande pour commander l'écran (1, 3), **caractérisée en ce que** l'unité de traitement d'image (1, 2) présente une unité pour déterminer une plage centrale et une plage marginale de la zone connexe correspondante et elle est conçue pour affecter aux pixels de la zone centrale des données d'image ayant une luminosité réduite, alors qu'aux pixels de la zone marginale sont affectées des données d'image ayant des valeurs de luminosité différentes de celle-ci.

2. Unité d'affichage pour automobile selon la revendication 1, **caractérisée en ce que** l'unité de traitement d'image (1, 2) est conçue pour affecter aux pixels de la zone centrale des données d'image ayant une luminosité réduite, alors qu'aux pixels de la zone marginale sont affectées des données d'image ayant des valeurs de luminosité inchangées.

3. Unité d'affichage pour automobile selon la revendication 1, **caractérisée en ce que** l'unité de traitement d'image est conçue pour affecter aux pixels de la zone centrale des données d'image ayant une luminosité réduite, alors qu'aux pixels de la zone marginale sont affectées des données d'image ayant des valeurs de luminosité moins réduites que celle de la zone centrale.

4. Unité d'affichage pour automobile selon la revendication 3, **caractérisée en ce que** l'unité de traitement d'image (1, 2) est conçue pour affecter aux pixels de la zone centrale des données d'image ayant une luminosité réduite, alors qu'aux pixels de la zone marginale sont affectées des données d'image dont les valeurs de luminosité s'approchent de celle de la zone centrale à mesure qu'ils se rapprochent de la zone centrale.

5. Unité d'affichage pour automobile selon l'une des revendications précédentes, **caractérisée en ce que** l'unité de traitement d'image (1, 2) est précédée par un étage de compression destiné à réduire la dynamique de luminosité, lequel est conçu pour comprimer les valeurs de la luminosité à un intervalle de luminosité compris entre Hmax et Hmin.

6. Unité d'affichage pour automobile selon la revendication 5, **caractérisée en ce que** la valeur Hmax est choisie comme seuil de luminosité prédéfini pour déterminer les zones connexes.

7. Utilisation d'une unité d'affichage pour automobile selon l'une des revendications précédentes avec un appareil de vision nocturne comprenant une caméra (1, 1), notamment une caméra à infrarouges, qui indique une courbe de luminosité logarithmique dans un véhicule.
